# EUROPÄISCHE PATENTSCHRIFT

(11) **EP 3 076 058 B1**
(45) Veröffentlichungstag und Bekanntmachung des Hinweises auf die Patenterteilung: **16.08.2017**
(21) Anmeldenummer: 15162390.7
(22) Anmeldetag: 02.04.2015
(51) Int. Cl.: F16K 17/04

(54) **DRUCKREGELVENTIL**
PRESSURE CONTROL VALVE
CLAPET DE RÉGLAGE DE PRESSION

(43) Veröffentlichungstag der Anmeldung: 05.10.2016
(73) Patentinhaber: HAWE Hydraulik SE, 81673 München (DE)
(72) Erfinder: Aneder, Georg, 82275 Emmering (DE); Zwingler, Engelbert, 85625 Antholing (DE); Haas, Alexander, 85469 Walpertskirchen (DE)
(74) Vertreter: Grosse Schumacher Knauer von Hirschhausen

(56) Entgegenhaltungen:
- EP-A1- 0 487 944
- EP-A1- 1 628 056
- DE-U- 7 428 678
- FR-A- 1 318 596

## Beschreibung

Die Erfindung betrifft ein Druckregelventil der im Oberbegriff des Patentanspruchs 1 angegebenen Art.

Derartige Druckregelventile mit extremer Hysterese kommen in der Hochdruckhydraulik auf verschiedensten Gebieten zum Einsatz. Beispielsweise offenbart DE 7428678 U ein Druckregelventil, das z.B. einen Öffnungsdruck von 72 bar mit dem Kegel einstellt, und einen Schließdruck von nur 10 bar mit dem Kolbenteller, jeweils unter der Last derselben Regelfeder. Da der Kolbenteller einen gegenüber dem Sitz engeren Kanal zum Niederdruck-Anschluss aus der Kammer aufweist, bewegt sich bei Erreichen des Öffnungsdrucks der Kegel nur geringfügig vom Sitz weg, hingegen beim Erreichen des Schließdrucks schlagartig auf den Sitz. Dies kann dazu führen, dass ein Druckabfall bei Erreichen des Öffnungsdrucks relativ flach und/oder undefiniert ist, bzw. der Schließdruck auch relativ flach bzw. undefiniert ausfällt. Es ist zwar der Kanal im Kolbenteller eine Art Drosselstelle zum stromauf des Niederdruck-Anschlusses der Kammer, die die Abhebebewegung des Kegels vom Sitz über den Kolbenteller verstärken sollte, jedoch ist dies nicht sichergestellt, da der Kolbenteller eine hemmende, radial komprimierte Gleitdichtung trägt und die Drosselwirkung konstant und hubunabhängig bleibt. Häufig werden solche Druckregelventile auf Anwendungsgebieten eingesetzt, in denen es wichtig ist, das Erreichen des Öffnungsdruckes und/oder das Erreichen des Schließdrucks und das Ansprechen des Druckregelventils exakt abzugreifen. Beispielsweise, um einen Impuls zu erhalten, mit dem eine Druckquelle ein- oder auszuschalten ist, oder als Bestätigung für beispielsweise das ordnungsgemäße Erreichen des Öffnungsdrucks und/oder den Zeitpunkt des Erreichens des Öffnungs- und/oder Schließdrucks. Diese Forderung kann das bekannte Druckregelventil nicht zuverlässig erfüllen.

Von Interesse ist auch EP 0 487 944 A1.

Der Erfindung liegt die Aufgabe zugrunde, ein Druckregelventil der eingangs genannten Art anzugeben, bei dem das Erreichen des Öffnungsdrucks und/oder Schließdrucks gut abgreifbar ist.

Die gestellte Aufgabe wird mit den Merkmalen des Patentanspruchs 1 gelöst.

Da der Drosselbereich durch die positive Überdeckung zwischen dem Kolbenteller und dem seitlich in der Kammer platzierten Niederdruck-Anschluss definiert ist und in der Schließstellung des Kegels am Sitz praktisch eine direkte Verbindung zum Niederdruck-Anschluss versperrt, wird der in der Praxis nur Zehntel-Millimeter-Abhebehub des Kegels vom Sitz vom Kolbenteller schlagartig um mindestens den Faktor 5 bzw. sogar 10 verstärkt und so der Kolbenteller gegen die Regelfeder rasch maximal weit angehoben, ehe die Verbindung mit dem Niederdruck-Anschluss frei wird. Daraus resultiert zumindest ausgeprägter und scharfer Übergang zum Öffnungsdruck. Dieser ausgeprägte und relativ steile Übergang lässt sich einfach abgreifen und nutzen; und ergibt sich auch beim Schließdruck. Es kann nämlich zweckmäßig sein, dass die Annäherung des Kegels an den Sitz vor Erreichen des niedrigen Schließdrucks zunächst verzögert oder vergleichmäßigt wird, weil die positive Überdeckung hier hubabhängig und zunehmend zur Wirkung kommt, ehe die endgültige Aufsetzbewegung schlagartig und genau beim Schließdruck erfolgt.

Zweckmäßig ist der Kolbenteller in der Kammer mit seinem Umfang ohne Dichtung mit einer Schieberpassung zur Kammerwand geführt. Die Schieberpassung, beispielsweise auf den Durchmesser bezogen ca. 0,1 bis 0,2 mm, sichert einerseits die leichtgängige Bewegung des Kolbentellers in der Kammer, und gewährleistet andererseits einen sehr wirksamen, hubabhängig variablen Drosselbereich innerhalb der positiven Überdeckung und zwischen dem Sitz und dem Niederdruck-Anschluss.

Zweckmäßig erstreckt sich der Drosselbereich bis oder nahe zur Höhe eines oberen Randes des Niederdruck-Anschlusses in der Kammerwand, was einen wünschenswert großen Hubweg des Kolbentellers beim Öffnen und Schließen des Druckregelventils erzwingt und den Vorteil bietet, dass sich die Drosselwirkung relativ linear mit zunehmender positiver Überdeckung verstärkt bzw. mit abnehmender positiver Überdeckung verringert.

Vorzugsweise ist der Drosselbereich in Führungsrichtung länger als die Höhe des Kolbentellers im Drosselbereich.

Um sicherzustellen, dass sich bei maximalen Öffnungshub des Kegels und des Kolbentellers hinter dem Kolbenteller kein das Halten der Offenstellung gefährdender Staudruck entwickelt, sondern Druckmittel am Kolbenteller-Rand vorbei in den Niederdruck-Anschluss gelangt, ist es zweckmäßig, wenn die Kammerwand in etwa ab oberem Rand des Niederdruck-Anschlusses weiter nach oben ein Durchmesserübermaß gegenüber dem Durchmesser der Beaufschlagungsfläche des Kolbentellers aufweist.

Herstellungstechnisch einfach kann der Kegel am Kolbenteller angeordnet sein. Dies kann aber hohe Präzision bei der Ausrichtung zwischen der den Kolbenteller führenden Kammerwand bzw. der Kammerachse und dem Sitz bzw. der Sitzachse erfordern.

Alternativ sind der Kolbenteller und der Kegel baulich getrennt. Dann kann die Präzision der Ausrichtung der jeweiligen Achsen von Kammer und Sitz geringer sein, insbesondere, wenn der separate Kegel in der Komponente bewegungsgeführt ist, die den Sitz aufweist.

Um nicht nur die Druckunterschiede und Flächenunterschiede zum raschen und zügigen Aufsteuern, und gegebenenfalls Zusteuern, nutzen zu können, sondern auch strömungsdynamische Kräfte, kann es zweckmäßig sein, im Kolbenteller den Kegel direkt umgreifend eine Vertiefung zu formen, die strömungsdynamische Kräfte nutzen lässt und die Strömungsverhältnisse speziell beim anfänglichen Abheben des Kegels vom Sitz verbessert. Alternativ oder additiv kann auch eine umlaufende Vertiefung im Boden der Kammer und dort im Umfangsbereich zweckmäßig sein.

Eine besonders zweckmäßige Ausführungsform zeichnet sich dadurch aus, dass der Kolbenteller einen sich durch die Regelfeder nach außen aus dem Druckregelventil erstreckenden Fortsatz zur mechanischen Betätigung des Druckregelventils aufweist. Mittels des Fortsatzes kann das Druckregelventil von außen manuell oder durch eine Hilfsvorrichtung geöffnet oder geschlossen werden.

Zweckmäßig ist das Druckregelventil eine Einschraubpatrone, die kostengünstig herstellbar ist und wenig Einbauraum benötigt.

Das Verhältnis zwischen den Beaufschlagungsflächen im Sitz und am Kolbenteller sollte bei etwa 1: 40 bis etwa 1: 60 liegen. Um etwa diesen Faktor kann der Schließdruck niedriger sein als der Öffnungsdruck. Dabei sollte der Niederdruck-Anschluss größer sein als der Sitz.

Zweckmäßig ist ferner in Schließstellung des Kegels am Sitz die positive Überdeckung so eingestellt, dass sie etwa 50 bis 70 % des Durchmessers der Beaufschlagungsfläche im Sitz entspricht.

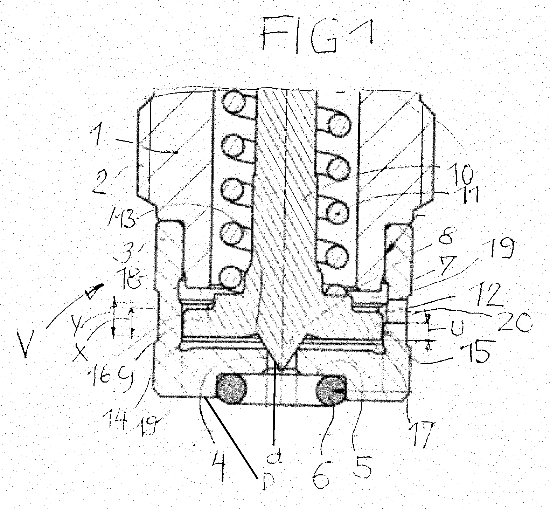

Eine Ausführungsform des Erfindungsgegenstandes wird anhand der Zeichnung erläutert. Fig. 1 ist ein Längsschnitt eines Druckregelventils V, ausgebildet als Ventilpatrone, in drucklosem Zustand und in der Schließstellung.

Ein in Fig. 1 im Längsschnitt gezeigter Unterteil eines Druckregelventils V erbringt die Funktion eines Druckbegrenzungsventils mit großer Hysterese, das in vielen Einsatzgebieten der Hochdruckhydraulik verwendet wird. Im gezeigten Fall handelt es sich um eine Einschraubpatrone mit einem ein Gewinde 2 aufweisenden Gehäuse 1. Alternativ könnten die aktiven Komponenten des Druckregelventils V in einem Block verbaut sein.

An dem Gehäuse 1 ist ein von unten her aufgepresster, topfförmiger Einsatz 3, z.B. aus Stahl, befestigt, in welchem mittig ein als Bohrung gebildeter Sitz 4 mit einer Beaufschlagungsfläche d enthalten ist. An der Unterseite des Einsatzes 3 ist eine den Sitz 4 umgebene Vertiefung 5 geformt, die zur Aufnahme beispielsweise eines O-Ringes 6 dient.

Der Einsatz 3 definiert mit dem Gehäuse 1 eine eine Regelfeder 11 aufnehmende Kammer 7, in der ein Kegel 8 unter der Kraft der Regelfeder 11 mit dem Sitz 4 (Sitzventilbauart mit leckagefreier Schließstellung) zusammenwirkt. Die Regelfeder 11 definiert im Zusammenspiel mit dem Kegel 8 und der Beaufschlagungsfläche d des Sitzes 4 einen definierten hohen Öffnungsdruck des Druckregelventils V, das beispielsweise am Sitz 4 mit einem Verbraucherdruck und/oder dem Druck einer Druckquelle beaufschlagt wird, und aus dessen Kammer 7 ein dort seitlich platzierter Niederdruck-Anschluss 12 herausführt ist (z.B. ein Tankanschluss).

Der Kegel 8 ist hier an einem Kolbenteller 9 angebracht, dessen Beaufschlagungsfläche D ein Vielfaches der Beaufschlagungsfläche d des Kegels 8 im Sitz 4 ist. Das Verhältnis von d: D kann z.B. zwischen etwa 1: 40 und 1: 60 liegen. Die Regelfeder 11 stützt sich auf der Oberseite des Kolbentellers 9 ab. Der Kolbenteller 9 trägt hier z.B. einen nach außen aus dem Druckregelventil V herausgeführten Fortsatz 10, der dazu benutzt werden kann, das Druckregelventil V beispielsweise bei Bedarf von Hand zu schließen und/oder zu öffnen.

In der Unterseite des Kolbentellers 9 kann, den Kegel 8 direkt umgreifend, eine umlaufende Vertiefung 13 eingeformt sein. Ebenso kann in einem Umfangsbereich 14 eines ebenen Bodens der Kammer 7 eine umlaufende Vertiefung geformt sein, beides zur Verbesserung von Strömungsverhältnissen.

Der Kolbenteller 9 ist beispielsweise mit einer Schieberpassung an der Kammerwand 16 der Kammer 7 geführt und wirkt in der Schließstellung des Kegels 8 auf dem Sitz 4 mit dem unteren Rand 20 des Niederdruck-Anschlusses 12 mit einer positiven Überdeckung U zusammen, und zwar bis nahe zu seiner oberen definierten Endposition an einem Anschlag 19 des Gehäuses 1. Die positive Überdeckung definiert wirkungsmäßig zwischen dem Sitz 4 und dem Niederdruck-Anschluss 12 einen umlaufenden Drosselbereich 15. Die Höhe Y der Kammerwand, innerhalb derer der Kolbenteller 9 so geführt wird, kann größer sein als die Höhe X des Kolbentellers 9 im Drosselbereich 15. Die positive Überdeckung U kann etwa 50 bis 70 % des Durchmessers der Beaufschlagungsfläche d des Sitzes 4 betragen. Von etwa dem oberen Rand 19 des Niederdruck-Anschlusses 12 nach oben ist in der Kammerwand ein im Durchmesser gegenüber dem Durchmesser des Kolbentellers 9 vergrößerter Bereich 18 geformt, so dass bei am Anschlag 19 anliegendem Kolbenteller 9 Druckmittel aus dem oberen Teil der Kammer 7 zum Niederdruck-Anschluss 12 gelangt.

Alternativ (nicht gezeigt) könnte der Kegel 8 vom Kolbenteller 9 als Hubhilfe baulich getrennt sein. Zweckmäßig wird der Kegel 8 dann in der zum Sitz 4 führenden Bohrung des Einsatzes 3 geführt. Hiermit werden unerwünschte Einwirkungen von herstellungsbedingten Ausrichtungsfehlern zwischen den Achsen der Kammer 7 und des Sitzes 4 auf die leckagefreie Zusammenarbeit von Kegel 8 und Sitz 4 vermieden.

### Funktion:

Wird im Sitz 4 der definierte Öffnungsdruck des Druckregelventils V erreicht, dann hebt sich der Kegel 8 geringfügig vom Sitz 4. Das Druckmittel schießt in den unteren Teil der Kammer 7 und beaufschlagt den Kolbenteller 9 mit großer Kraft. Da der Abströmweg zum Niederdruck-Anschluss 12 durch den Drosselbereich 15 praktisch noch versperrt wird, wird der Kolbenteller 9 schlagartig bis in die obere Endstellung am Anschlag 19 verstellt, so dass Druckmittel über den nun freigegebenen Anschluss 12 unbehindert abströmt, woraus beim Öffnungsdruck ein deutlicher und steiler Druckabfall im Sitz auftritt.

Die maximale Öffnungsstellung wird gehalten, bis der Schließdruck nahezu erreicht ist, der deutlich geringer ist als der Öffnungsdruck. Dann beginnt der Kolbenteller 9 unter der Kraft der Regelfeder 11 langsam herab zu sinken, wobei durch den wieder wirksamen Drosselbereich 15 und innerhalb der positiven Überdeckung U Druckmittel von unterhalb des Kolbentellers 9 durch den Niederdruck-Anschluss 12 zunächst nur erschwert ausgeschoben werden kann. Die Bewegung des Kegels 8 verzögert sich und ist vergleichmäßigt. Erst wenn der Schließdruck tatsächlich erreicht wird, setzt der Kegel 8 schlagartig auf den Sitz 4 auf, woraus ein deutlicher und gut abgreifbarer Druckanstieg im Sitz 4 resultiert.

Die Offnungs- und Schließstellungen des Kegels 8 können, falls erforderlich, auch über den Fortsatz 10 von außerhalb des Druckregelventils V eingestellt werden.

## Patentansprüche

1. Druckregelventil (V) zur Einstellung eines durch eine Regelfeder (11) und einen von der Regelfeder (11) auf einen Sitz (4) beaufschlagten Kegel (8) definierten Öffnungsdrucks und eines niedrigeren, durch die Regelfeder (11) und einen Kolbenteller (9) als Hubhilfe definierten Schließdrucks, wobei das Druckregelventil stromab des Sitzes (4) eine Kammer (7) mit einem Niederdruck-Anschluss (12) aufweist, in der der Kolbenteller (9) verschiebbar geführt ist, wobei der Kolbenteller (9) in Führungsrichtung in der Kammer (7) und in der Schließstellung des Kegels (8) am Sitz (4) mit einem unteren Rand (20) des seitlich in der Kammer (7) platzierten Niederdruck-Anschlusses (12) mit positiver Überdeckung (U) zusammenwirkt und innerhalb der positiven Überdeckung (U) zwischen dem Sitz (4) und dem unteren Rand (20) des Niederdruck-Anschlusses (12) einen Drosselbereich (15) definiert, über welche Abhebebewegungen des Kegels (8) vom Sitz (4) verstärkbar bzw. beschleunigbar und/oder Aufsetzbewegungen des Kegels (8) auf den Sitz (4) verzögerbar sind, **dadurch gekennzeichnet, dass** die vom Kolbenteller zum Sitz (4) weisende Beaufschlagungsfläche (D) ein Vielfaches der Beaufschlagungsfläche (d) des Kegels (8) im Sitz (4) ist.

2. Druckregelventil nach Anspruch 1,
**dadurch gekennzeichnet, dass**
der Kolbenteller (9) in der Kammer (7) mit einer Schieberpassung an der Kammerwand (16) geführt ist.

3. Druckregelventil nach Anspruch 1,
**dadurch gekennzeichnet, dass**
sich der Drosselbereich (15) bis oder nahe zur Höhe eines oberen Randes (19) des Niederdruck-Anschlusses (12) erstreckt, und, vorzugsweise, in Führungsrichtung ein Kolbenteller-Führungsbereich der Kammerwand (16) länger ist als die Höhe (X) des Kolbentellers im Drosselbereich (15).

4. Druckregelventil nach Anspruch 1,
**dadurch gekennzeichnet, dass**
die Wand der Kammer (7) in etwa vom oberen Rand (19) des Niederdruck-Anschlusses (12) weiter nach oben ein Durchmesser-Übermaß (18) gegenüber dem Durchmesser der Beaufschlagungsfläche (D) des Kolbentellers (9) aufweist.

5. Druckregelventil nach Anspruch 1,
**dadurch gekennzeichnet, dass**
der Kegel (8) am Kolbenteller (9) vorgesehen ist.

6. Druckregelventil nach Anspruch 1,
**dadurch gekennzeichnet, dass**
der Kegel (8) baulich vom Kolbenteller (9) separiert, und, vorzugsweise, separat geführt ist.

7. Druckregelventil nach Anspruch 1,
**dadurch gekennzeichnet, dass**
im Kolbenteller (9) den Kegel (8) direkt umgreifend eine Strömungsleit-Vertiefung (13) geformt ist.

8. Druckregelventil nach Anspruch 1,
**dadurch gekennzeichnet, dass**
ein den Sitz (4) umgebender, ebener Boden der Kammer (7) im Umfangsbereich (14) vertieft ist.

9. Druckregelventil nach Anspruch 1,
**dadurch gekennzeichnet, dass**
der Kolbenteller (9) einen sich durch die Regelfeder (11) nach außen aus dem Druckregelventil (V) erstreckenden Fortsatz (10) zur mechanischen Betätigung des Druckregelventils (V) aufweist.

10. Druckregelventil nach wenigstens einem der vorhergehenden Ansprüche,
**dadurch gekennzeichnet, dass**
das Druckregelventil (V) eine Einschraubpatrone ist.

11. Druckregelventil nach wenigstens einem der vorhergehenden Ansprüche,
**dadurch gekennzeichnet, dass**
das Verhältnis zwischen den Beaufschlagungsflächen (d):(D) bei ca. 1: 40 bis 1: 60 liegt.

12. Druckregelventil nach wenigstens einem der vorhergehenden Ansprüche,
**dadurch gekennzeichnet, dass**
in der Schließstellung des Kegels (8) am Sitz (4) die positive Überdeckung (U) ca. 50 bis 70% des Durchmessers der Beaufschlagungsfläche (d) des Sitzes (4) entspricht.

13. Druckregelventil nach Anspruch 1,
**dadurch gekennzeichnet, dass**
der Querschnitt des Niederdruck-Anschlusses (12) größer ist als die Beaufschlagungsfläche (d) des Kegels (8) im Sitz (4).

## Claims

1. A pressure control valve (V) for setting an opening pressure defined by a control spring (11) and a conical member (8) urged on by the control spring (11) onto a seat (4) and a lower closing pressure defined by the control spring (11) and a piston head (9) constituting a lifting aid, wherein, downstream of the seat (4), the pressure control valve includes a chamber (7) with a low pressure connection (12), in which the piston head (9) is slidably guided, wherein the piston head (9) cooperates in the guide direction in the chamber (7) and in the closed position of the conical member (8) on the seat (4) with a lower edge (20) of the low pressure connection (12) positioned laterally in the chamber (7) with a positive overlap (U) and defines within the positive overlap (U) between the seat (4) and the lower edge (20) of the low pressure connection (12) a throttling region (15), over which lifting movements of the conical member (8) from the seat (4) may be amplified or accelerated and/or closing movements of the conical member (8) towards the seat (4) may be delayed, **characterised in that** the impingement area (D) directed from the piston head towards the seat (4) is a multiple of the impingement area (d) of the conical member (8) in the seat (4).

2. A pressure control valve as claimed in Claim 1, **characterised in that** the piston head (9) is guided in the chamber (7) with a sliding fit against the chamber wall (16).

3. A pressure control valve as claimed in Claim 1, **characterised in that** the throttling region (15) extends to or close to the height of an upper edge (16) of the low pressure connection (12) and, preferably, a piston head guide region of the chamber wall (16) is longer in the guide direction than the height (X) of the piston head in the throttling region (15).

4. A pressure control valve as claimed in Claim 1, **characterised in that** upwardly from about the upper edge (19) of the low pressure connection (12) the wall of the chamber (7) has an oversized diameter with respect to the diameter of the impingement area (D) of the piston head (9).

5. A pressure control valve as claimed in Claim 1, **characterised in that** the conical member (8) is provided on the piston head (9).

6. A pressure control valve as claimed in Claim 1, **characterised in that** the conical member (8) separates structurally from the piston head (9) and is, preferably, separately guided.

7. A pressure control valve as claimed in Claim 1, **characterised in that** formed in the piston head (9) there is a flow guiding recess (13) directly encompassing the conical member (8).

8. A pressure control valve as claimed in Claim 1, **characterised in that** a flat base of the chamber (7), surrounding the seat (4), is recessed in the peripheral region (14).

9. A pressure control valve as claimed in Claim 1, **characterised in that** the piston head (9) includes a projection (10), which extends outwardly through the control spring (11) out of the pressure control valve (V) for mechanical actuation of the pressure control valve (V).

10. A pressure control valve as claimed in at least one of the preceding claims, **characterised in that** the pressure control valve (V) is a screw-in cartridge.

11. A pressure control valve as claimed in at least one of the preceding claims, **characterised in that** the ratio of the impingement surfaces (d):(D) is ca. 1:40 to 1:60.

12. A pressure control valve as claimed in at least one of the preceding claims, **characterised in that** in the closed position of the conical member (8) on the seat (4) the positive overlap (U) corresponds to ca. 50 to 70% of the diameter of the impingement area (d) of the seat (4).

13. A pressure control valve as claimed in Claim 1, **characterised in that** the cross-sectional area of the low pressure connection (12) is larger than the impingement area (d) of the conical member (8) in the seat (4).

## Revendications

1. Régulateur de pression (V) destiné au réglage d'une pression d'ouverture définie par un ressort de régulation (11) et par un cône (8) sollicité sur un siège (4) par le ressort de régulation (11), d'une part, et d'une pression de fermeture plus faible, définie sous la forme d'une assistance au levage par l'intermédiaire du ressort de régulation (11) et d'un disque de piston (9), d'autre part, selon lequel le régulateur de pression se trouvant en aval du siège (4) présente une chambre (7) avec un raccordement de basse pression (12), dans laquelle le disque de piston (9) est guidé de manière à pouvoir coulisser, selon lequel le disque de piston (9), dans la direction du guidage dans la chambre (7) et dans la position de fermeture du cône (8), interagit avec un recouvrement (U) positif au niveau du siège (4) avec une bordure (20) inférieure du raccordement de basse pression (12) mis en place latéralement dans la chambre (7) et définit une zone d'étranglement (15) à l'intérieur du recouvrement (U) positif situé entre le siège (4) et la bordure (20) inférieure du raccordement de basse pression (12), zone d'étranglement (15) par l'intermédiaire de laquelle des mouvements de soulèvement du cône (8) du siège (4) peuvent être amplifiés, respectivement peuvent être accélérés et/ou des mouvements d'abaissement du cône (8) sur le siège (4) peuvent être retardés,
**caractérisé en ce que**
la surface de sollicitation (D) qui est orientée du disque de piston en direction du siège (4) est un multiple de la surface de sollicitation (d) du cône (8) dans le siège (4).

2. Régulateur de pression selon la revendication 1,
**caractérisé en ce que**
le disque de piston (9) est guidé dans la chambre (7) avec un ajustement du coulisseau au niveau de la paroi de la chambre (16).

3. Régulateur de pression selon la revendication 1,
**caractérisé en ce que**
la zone d'étranglement (15) s'étend jusqu'à la hauteur ou jusqu'à la proximité de la hauteur d'une bordure (19) supérieure du raccordement de basse pression (12) et, de préférence, une zone de guidage du disque de piston de la paroi de la chambre (16) est plus longue, dans la direction du guidage, que la hauteur (X) du disque de piston dans la zone d'étranglement (15).

4. Régulateur de pression selon la revendication 1,
**caractérisé en ce que**
la paroi de la chambre (7) présente, en partant à peu près de la bordure (19) supérieure du raccordement de basse pression (12) pour s'étendre vers le haut, un surdimensionnement du diamètre (18) par rapport au diamètre de la surface de sollicitation (D) du disque de piston (9).

5. Régulateur de pression selon la revendication 1,
**caractérisé en ce que**
le cône (8) est prévu au niveau du disque de piston (9).

6. Régulateur de pression selon la revendication 1,
**caractérisé en ce que**
le cône (8) est séparé structurellement du disque de piston (9) et, de préférence, est guidé séparément.

7. Régulateur de pression selon la revendication 1,
**caractérisé en ce que**
un renfoncement (13) de la conduite de circulation est moulé dans le disque de piston (9), directement en entourant le cône (8).

8. Régulateur de pression selon la revendication 1,
**caractérisé en ce que**
un fond de la chambre (7), lequel est plan et entoure le siège (4), est renfoncé dans la zone de la périphérie (14).

9. Régulateur de pression selon la revendication 1,
**caractérisé en ce que**
le disque de piston (9) présente un prolongement (10) qui s'étend en dehors du régulateur de pression (V) vers l'extérieur, à travers le ressort de régulation (11), en vue de l'actionnement mécanique du régulateur de pression (V).

10. Régulateur de pression selon tout au moins l'une des revendications précédentes,
**caractérisé en ce que**
le régulateur de pression (V) est une cartouche à visser.

11. Régulateur de pression selon tout au moins l'une des revendications précédentes,
**caractérisé en ce que**
le rapport entre les surfaces de sollicitation (d):(D) se situe dans une plage comprise entre environ 1:40 et 1:60.

12. Régulateur de pression selon tout au moins l'une des revendications précédentes,
**caractérisé en ce que**
le recouvrement (U) positif correspond à environ 50 à 70 % du diamètre de la surface de sollicitation (d) du siège (4), dans la position de fermeture du cône (8), au niveau du siège (4).

13. Régulateur de pression selon la revendication 1,
**caractérisé en ce que**
la section transversale du raccordement de basse pression (12) est plus grande que la surface de sollicitation (d) du cône (8) dans le siège (4).
